# FASCICULE DE BREVET EUROPEEN

(11) **EP 3 099 532 B1**
(45) Date de publication et mention de la délivrance du brevet: **14.03.2018**
(21) Numéro de dépôt: 15702527.1
(22) Date de dépôt: 06.01.2015
(51) Int. Cl.: B60R 21/214, B60J 3/02

(54) **DISPOSITIF DE FIXATION D'UN MODULE DE COUSSIN GONFLABLE ET D'UN PARE-SOLEIL**
VORRICHTUNG ZUR BEFESTIGUNG EINES AIRBAGMODULS UND EINER SONNENBLENDE
DEVICE FOR ATTACHING AN AIRBAG MODULE AND A SUN VISOR

(30) Priorité: 30.01.2014 FR 1450759
(43) Date de publication de la demande: 07.12.2016
(73) Titulaire: PSA Automobiles SA, 78300 Poissy (FR)
(72) Inventeur: VILLA, Laurent, F-91460 Marcoussis (FR)
(86) Numéro de dépôt international: PCT/FR2015/050020
(87) Numéro de publication internationale: WO 2015/114229

(56) Documents cités:
- WO-A2-03/104033
- US-A1- 2003 052 476
- US-A1- 2005 040 627

## Description

L'invention a trait au domaine des véhicules automobiles, plus particulièrement à la fixation d'un coussin gonflable au toit du véhicule. Plus particulièrement encore l'invention a trait à la fixation d'un tel accessoire en haut d'un pare-brise à proximité d'un pare-soleil.

La réalisation d'un véhicule automobile avec un coussin gonflable logé sur le toit est connue. Un tel accessoire est généralement réalisé pour la protection du conducteur et/ou du passager, il est précisément destiné à protéger au mieux une personne lors d'une collision du véhicule. Dans le cas d'une collision frontale, qui est celle généralement prioritaire pour laquelle le véhicule est ainsi réalisé, le torse et la tête de la personne sont les parties du corps qu'un coussin déployé est apte à protéger. Pour ce faire une cartouche de gaz comprimé est libérée de manière à gonfler le coussin de manière quasi instantanée et le déployer en avant de la personne. La forme du déploiement final d'un tel coussin est obtenue principalement par la géométrie qui lui est donnée, et il peut être optimisé selon l'habitacle et les équipements intérieurs. La dynamique d'ouverture du coussin gonflable et les effets qui y sont liés sont des critères importants de sa réalisation, il est recherché par exemple qu'une telle ouverture jusqu'au déploiement ne génère pas de risques supplémentaires de blessure pour le passager. Or il est aussi connu de loger le dispositif de manière à ce qu'il ne soit pas visible, par exemple derrière la garniture de toit, celle-ci étant généralement à proximité de la tête du conducteur ou du passager. La garniture est un élément décoratif du toit. Un pare-soleil en tant qu'élément fonctionnel du toit est monté sous la garniture à proximité encore plus immédiate de la personne à protéger et pouvant être en dessous du coussin gonflable. D'autres éléments fonctionnels peuvent aussi être réalisés sur le toit, par exemple un rétroviseur ou des éclairages. Il est donc recherché de réaliser le dispositif de coussin gonflable de toit tout en s'accommodant de tels éléments fonctionnels ou décoratifs de manière à éviter de générer des risques supplémentaires de blessure pour le passager.

Le document de brevet publié US 2005/0040627A1 divulgue un véhicule comprenant un module de coussin gonflable logé sur le toit en haut du pare-brise et au-dessus d'une garniture de toit, un pare-soleil se trouvant en dessous de la garniture. Le dispositif de coussin gonflable comprend un boîtier vraisemblablement métallique et de section généralement en forme de U couché avec l'ouverture vers l'avant. Le boîtier est fixé au toit par vissage et la garniture ainsi que le pare-soleil sont montés sur le bord avant de la paroi inférieure du boîtier. Cet enseignement est intéressant en ce qu'il permet un montage aisé du module de coussin gonflable. Il présente toutefois l'inconvénient que la paroi inférieure à laquelle le pare-soleil est fixé est susceptible de plier vers le bas lors du déploiement du coussin et, partant, de déplacer le pare-soleil. Ceci est d'autant plus vrai que la portion avant de la garniture est rigide, notamment au niveau de la ligne de pivotement. Le déplacement du pare-soleil est susceptible de blesser le passager du véhicule assis à l'avant du Le document US 2003/0052476 A1 divulgue un dispositif de fixation selon le préambule de la revendication 1. L'invention a pour objectif de proposer une solution de fixation d'un module de coussin gonflable entre le toit et la garniture d'un véhicule automobile au-dessus du pare-soleil palliant au moins un des inconvénients susmentionnés. Plus particulièrement, l'invention a pour objectif de proposer une solution de fixation d'un module de coussin gonflable qui soit rapide et sûre pour le passager concerné.

L'invention a pour objet un dispositif de fixation d'un module de coussin gonflable à l'avant du toit d'un véhicule automobile, dispositif comprenant les caractéristiques de la revendication 1. Selon un mode avantageux de l'invention, la plaque de soutien décrit longitudinalement au niveau du bord arrière une variation d'angle comprise entre 80° et 100°, de manière à présenter un profil coudé.

Selon un mode avantageux de l'invention, les moyens de fixation latéraux de la plaque de soutien comprennent des moyens de fixation rapide permettant la fixation provisoire de la plaque après engagement de son bord arrière avec le support et pivotement de ladite plaque.

Selon un mode avantageux de l'invention, la plaque de soutien comprend une patte sur chacun de ses deux bords latéraux, les moyens de fixation latéraux étant sur lesdites pattes, préférentiellement sous forme d'orifice(s) sur lesdites pattes.

Selon un mode avantageux de l'invention, au moins une des pattes comprend une languette apte à coopérer par insertion avec une ouverture du support lors du mouvement de pivotement de la plaque de soutien, et où, préférentiellement, un clip élastique à profil rétentif chausse ladite ou au moins une desdites languettes, et où, plus préférentiellement, ladite ou lesdites languettes présentent un contour avec au moins une encoche avec laquelle le clip coopère par engagement.

Avantageusement, l'engagement est tel qu'il s'oppose à une désolidarisation du clip de la languette. Le clip peut être réalisé en feuillard d'acier à ressort.

Selon un mode avantageux de l'invention, le support comprend, outre la portion transversale arrière, deux portions longitudinales aptes à coopérer avec les moyens de fixation latéraux, et préférentiellement à cloisonner latéralement le module.

Selon un mode avantageux de l'invention, chacune des pattes est configurée pour venir en appui sur une des portions longitudinales.

Avantageusement, la portion transversale arrière et une des portions longitudinales forment une seule pièce.

Avantageusement, les portions longitudinales et/ou la portion transversale arrière est/sont réalisée(s) en tôle métallique d'épaisseur de moins de 1.5 millimètres, en acier à haute résistance à la rupture.

Avantageusement, l'acier a une limite élastique Re > 450MPa et une résistance à la rupture Rm > 750MPa, il peut être de nuance DP 780.

Selon un mode avantageux de l'invention, la plaque de soutien comprend des nervures s'étendant préférentiellement longitudinalement et préférentiellement réalisées par déformation de ladite plaque. Elle peut comprendre une portion concave par rapport à sa surface extérieure et s'étendant transversalement, préférentiellement essentiellement au milieu de la plaque selon sa direction longitudinale.

Avantageusement, les rainures peuvent s'étendre sur plus de 80% de la longueur de la plaque.

Avantageusement, les rainures peuvent s'étendre sur la partie arrondie arrière formant la variation d'angle.

Avantageusement, la plaque de soutien est en aluminium d'épaisseur comprise entre 1 mm et 3mm ou en fer.

L'invention a également pour objet un véhicule automobile avec un pare-brise et un toit avec une traverse avant, comprenant un module de coussin gonflable fixé à ladite traverse au moyen d'un dispositif de fixation, ledit module étant configuré pour se déployer essentiellement vers l'avant et vers le bas, devant le conducteur ou le passager avant ; remarquable en ce que le dispositif de fixation est conforme à l'invention, le support étant fixé à la traverse avant préférentiellement par soudage.

La portion longitudinale du support situé vers l'extérieur au véhicule est préférentiellement soudée à un gousset à niveau de la traverse, ledit gousset étant soudé sur un profilé de toit longitudinal.

Avantageusement, la dimension du module de coussin gonflable dans le sens longitudinal du véhicule est comprise entre 200mm et 300mm.

Avantageusement, la dimension du module de coussin gonflable dans le sens transversal du véhicule est comprise entre 250mm et 350mm.

Avantageusement, la dimension du module de coussin gonflable en hauteur est comprise entre 40mm et 80mm.

Avantageusement, la traverse de toit est soudée à la couverture de toit le long de son bord avant.

Avantageusement, le module de coussin gonflable comprend une enveloppe extérieure en matériau plastique et/ou en fibre.

Avantageusement, le module de coussin gonflable comprend un creux correspondant à la forme convexe de la surface intérieure de la plaque.

Selon un mode avantageux de l'invention, le véhicule automobile comprend au moins un pare soleil, les fixations dudit ou des pare-soleil se logeant sur les portions longitudinales du dispositif de fixation du module de coussin gonflable.

Les mesures de l'invention sont intéressantes en ce qu'elles permettent au module de coussin gonflable de travailler, en l'occurrence de s'ouvrir, vers l'avant en franchissant la garniture, celle-ci s'ouvrant en avant de la personne protégée sans générer de risques supplémentaires de blessure pour elle. En effet, le module est rigidement cloisonné dans le toit via le dispositif de fixation ce qui ne génère pas de déplacement d'éléments décoratifs ou fonctionnels à proximité lors du déploiement du coussin.

D'autres caractéristiques et avantages de la présente invention seront mieux compris à l'aide de la description et des dessins parmi lesquels :
- La figure 1 est une illustration de la partie avant droite de l'habitacle d'un véhicule automobile en situation de collision avant, le véhicule étant conforme à l'invention, un passager étant en position contre un coussin gonflable en position déployée ;
- La figure 2 est une vue en éclaté du toit de la figure 1 ;
- La figure 3 est une illustration du montage au toit du module de coussin gonflable des figures 1 et 2 ;
- La figure 4 est une vue de dessous du toit des figures 1 à 3, le toit étant représenté sans garniture, deux dispositifs de fixation de module de coussin gonflable étant représentés, l'un des deux étant représenté sans plaque de soutien ;
- La figure 5 est une vue de dessous du toit de la figure 4, des pare-soleil étant montés sur les dispositifs de fixation ;

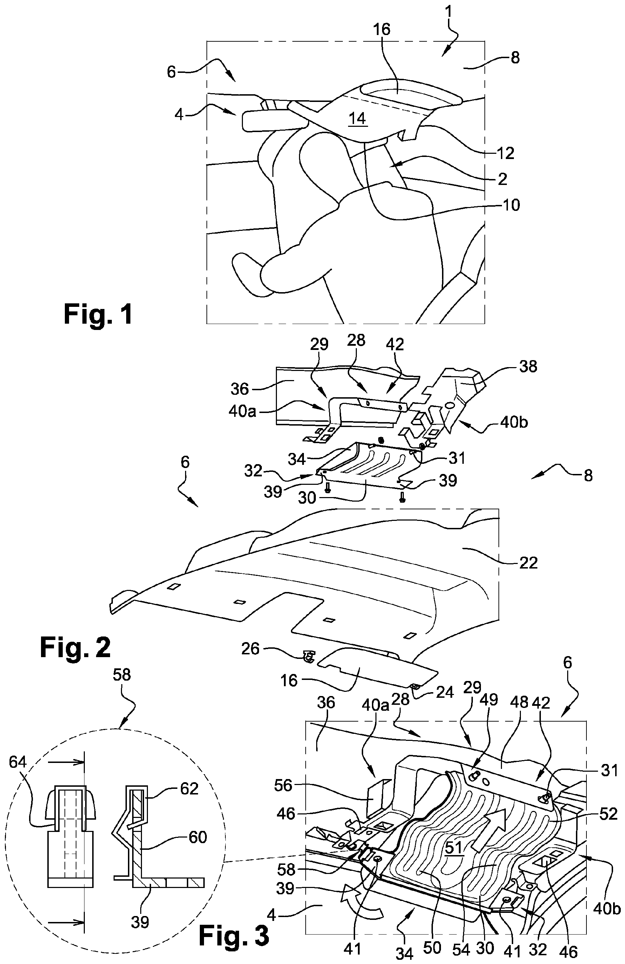

   La figure 1 illustre une mise en situation dans un habitacle 1 d'une collision frontale d'un véhicule automobile, un passager avant étant en position contre un coussin gonflable 2 déployé. On y voit un pare-brise 4, un toit 6, une garniture de pavillon de toit 8, le coussin gonflable 2 parti du toit 6 est essentiellement déployé vers l'avant et vers le bas, devant le passager de manière à le protéger. Pour arriver dans cette position, le coussin gonflable 2, libéré par du gaz sous pression, a forcé une ouverture de la garniture de pavillon de toit 8. On peut observer sur l'image le bord avant 10 ainsi que les bords latéraux 12 de la portion de garniture 14 dont l'ouverture a ainsi été forcée. Le toit comprend un pare soleil 16 disposé en arrière de la portion de garniture 14 et fixé au toit 6 ; le coussin gonflable 2, même après déploiement n'a pas engendré de déplacement du pare-soleil 16. En l'occurrence le véhicule comprend d'autres équipements fonctionnels à proximité de la portion de garniture 14, ces équipements ne se voyant pas non plus endommagés ou déplacés vers le passager lors du déploiement du coussin gonflable 2. La situation illustrée ci-avant pour le passager du véhicule peut aussi être celle du conducteur du véhicule, les éléments présentés plus haut comme se trouvant à l'avant droit de l'habitacle 1 devenant référencés à l'avant gauche de l'habitacle.

La figure 2 est une vue en éclaté du toit 6 du véhicule conforme à l'invention. Le toit 6 comprend un panneau 22 de garniture de pavillon 8. En dessous du panneau 22 est logé le pare soleil 16 avec une liaison pivotante 24 et un crochet détachable 26. Au-dessus du panneau 22 est prévu un dispositif de fixation 28 d'un module de coussin gonflable, comprenant un support 29 et une plaque de soutien 30 montée sur le support 29. La plaque 30 comprend des goujons 31 de fixation arrière ainsi que des moyens 32 de fixation latérale. Un module de coussin gonflable 34 est destiné à être fixé au véhicule par le dispositif 28. Au-dessus encore sur l'image, on peut observer que le toit 6 comprend une traverse de toit 36 et un gousset latéral 38. Plus précisément, la plaque de soutien 30 comprend des pattes 39, celles-ci pouvant être pourvues d'orifices 41 comme moyens de fixation latéraux 32, les moyens ci-avant pouvant être complétés par des vis, boulons ou rivets. Le support 29 du dispositif de fixation 28 comprend deux portions longitudinales (40a, 40b) fixées à la traverse de toit 36, chacune d'elles recevant les pattes 39 de fixation latérale de la plaque de soutien 30. Le support 29 comprend enfin une portion transversale 42 disposée à l'arrière des portions longitudinales et recevant les goujons 31 arrière de la plaque de soutien 30.

La figure 3 est une vue de dessous du toit 6 conforme à l'invention, il est représenté sans garniture. Le module de coussin gonflable 34 est vu en cours de montage, il est destiné à être logé sous la traverse 36 via le dispositif de fixation 28 et en haut du pare-brise 4, de manière à se déployer essentiellement vers l'avant et vers le bas, devant le conducteur ou le passager avant. On peut voir la plaque de soutien 30 montée en dessous du module de coussin gonflable 34, la plaque 30 étant, sur son bord arrière, dans un premier mouvement d'engagement (indiqué par la flèche du haut sur l'image) via ses goujons 31 dans la portion transversale 42. La plaque 30 est destinée à venir dans un deuxième mouvement par pivotement (indiqué par la flèche du bas sur l'image) le long de son bord arrière en appui sur les portions longitudinales (40a, 40b) en vue de sa fixation. La plaque 30 forme ainsi une paroi vers le bas du module 34. La dimension du module 34 peut être comprise entre 200mm et 300mm dans le sens longitudinal, entre 250mm et 350mm dans le sens transversal, et entre 40mm et 80mm dans la hauteur.

Les portions longitudinales (40a, 40b) présentent des ouvertures 46, préférentiellement des orifices aptes à recevoir les moyens de fixation latéraux 32 de la plaque de soutien 30. La portion transversale arrière 42 réalise une forme de bride arrière 48 présentant des orifices 49 au travers desquels passent les goujons 31. La plaque de soutien 30 comprend des nervures 50 qui peuvent s'étendre longitudinalement sur plus de 80% de la longueur de la plaque. La plaque 30 peut comprendre une portion concave 51 par rapport à sa surface extérieure, la portion 51 s'étendant transversalement, préférentiellement essentiellement au milieu de la plaque selon sa direction longitudinale. Les nervures 50 et la portion concave 51 peuvent être réalisées par déformation de ladite plaque, celle-ci étant en aluminium ou en fer. L'épaisseur de la plaque 30 réalisée en aluminium peut être comprise entre 1 mm et 3mm. Cette mise à forme de la plaque 30 est intéressante en ce qu'elle la rend plus rigide. Plus précisément, la plaque de soutien 30 comprend une portion arrière 52 formant un coude avec un angle compris entre 80° et 100° avec la portion principale 54 de la plaque. Le bord arrière 52 ainsi orienté est monté des goujons 31, ceux-ci s'étendant alors longitudinalement vers l'arrière au travers de la bride arrière 48. Les rainures 50 vues plus haut peuvent s'étendre sur la portion arrière 52. Les portions longitudinales présentent enfin des parties 56 permettant de cloisonner latéralement le module de coussin gonflable 34.

La figure 3 est également une illustration des moyens de fixation latéraux 32 de la plaque de soutien 30 ; elle comprend des moyens de fixation rapide 58 permettant le maintien provisoire de la plaque 30 sur au moins une des portions longitudinales (40a , 40b) du support 29 après engagement de son bord arrière 52 vu ci-avant. Ces moyens 58 sont formés dans au moins une des pattes latérales 39 de la plaque, vues en relation avec la figure 2. La patte 39 en question comprend alors une languette 60 pouvant être chaussée d'un clip élastique 62 à profil rétentif. Précisément, la languette 60 comprend au moins une encoche 64 par laquelle le clip élastique 62 est engagé et maintenu. L'engagement est tel qu'il s'oppose à une désolidarisation du clip 62 de la languette 60. Le clip 62 peut être réalisé en feuillard d'acier à ressort. Cette mesure est intéressante en ce qu'elle permet à un opérateur seul, d'effectuer le montage du module 34 au toit, le maintien provisoire de la plaque par la ou les languettes 60 permettant de manipuler plus aisément les pièces de fixation du type vis, boulons ou rivets de manière à effectuer la fixation de la plaque 30.

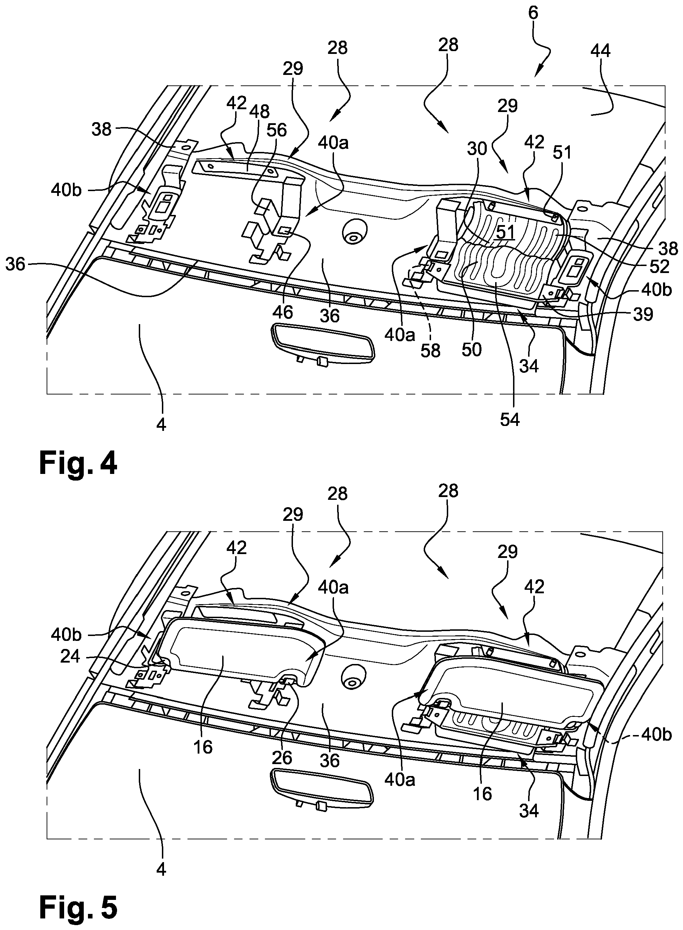

La figure 4 est une vue de dessous du toit 6, le toit étant représenté sans garniture. Deux dispositifs de fixation 28 de module de coussin gonflable 34 sont représentés au-dessus de deux places avant, l'un des deux dispositifs, à gauche sur l'image, étant présenté sans plaque de soutien 30, un module 34 étant monté sur l'autre à droite sur l'image. À la différence de l'étape de montage présentée en relation avec la figure 3, le module est ici présenté en position finale, après pivotement, les pattes de fixation 39 en appui sur le support 29, et les moyens de fixation rapides 58 engagés dans les ouvertures 46 du support 29. Les ouvertures 46 dans les supports 29 peuvent comprendre des orifices de fixation d'un pare-soleil, les orifices en question sont ici reconnaissable en forme carrée et/ou rectangulaire, ces orifices pouvant également être de forme circulaire. Sur le dispositif 28 de gauche, on peut voir précisément les portions longitudinales (40a, 40b) formant les parties latérales 56 soudées au toit. La portion longitudinale 40a, vers l'intérieur du véhicule, est soudée à la traverse avant 36, la portion longitudinale 40b, vers l'extérieur du véhicule, est soudée au niveau de la traverse 36 au gousset 38, les traverses 36 et gousset 38 étant en arrière du pare-brise 4. La traverse 36 est soudée à la couverture de toit 44 via une feuillure, le gousset 38 est soudé à un profilé de toit longitudinal du véhicule, à niveau de la traverse 36. Cette réalisation est similaire sur l'autre côté du véhicule à droite sur l'image.

Le module de coussin gonflable 34 est donc cloisonné sur ses faces non destinées à l'ouverture du sac gonflable qu'il renferme, seule la face avant du module vers le pare-brise 4 étant destinée à s'ouvrir; le module 34 est cloisonné par la traverse de toit 36 sur son dessus ; par la plaque de soutien 30 sur son dessous et son arrière, via sa portion principale 54 et sa portion arrière 52, respectivement ; par les parties latérales 56 des portions longitudinales (40a , 40b) du dispositif de fixation 28 sur ses côtés. Cette mesure est intéressante en ce que la réalisation du véhicule peut alors s'acquitter d'une fourniture de module à paroi rigide ce qui est avantageux sur la masse et le coût associés. Un module de coussin gonflable 34 peut ainsi comprendre une enveloppe extérieure en matériau plastique ou en fibre. Le module de coussin gonflable 34 peut comprendre un creux correspondant à la forme convexe 51 de la surface intérieure de la plaque 30.

Les portions longitudinales (40a , 40b) et/ou la portion transversale arrière 42, formant le support 29, est/sont réalisée(s) en tôle métallique. Le déclenchement du module 34 en question déployant des efforts importants sur le support 29, celui-ci est avantageusement réalisé en tôle d'acier à haute résistance à la rupture, le support 29 pouvant être en tôle avec une limite élastique Re > 450MPa et une résistance à la rupture Rm > 750MPa, par exemple la nuance d'acier DP780, un acier double phase (martensite dans une matrice ferritique), satisfait à ces caractéristiques.

La figure 5 est une vue similaire à la figure 4 et où l'on peut voir des pare-soleil 16 montés sur chacun des dispositifs de fixation 28. La fixation des pare-soleil 16 peut être réalisée par des moyens de fixation du type clipage et/ou clipage / empiochage sur les portions longitudinales (40a , 40b) des dispositifs 28 ; En l'occurrence, la portion longitudinale 40a et la portion transversal 42 pour chaque dispositif 28 forment une seule pièce, l'utilisation d'une tôle de moins de 1.5mm d'épaisseur pour cette pièce du support 29 étant favorable à l'utilisation de tels moyens. La liaison pivotante 24 du pare-soleil 16 peut être fixée à la portion longitudinale 40b, le crochet détachable 26 peut être fixé à la portion longitudinale 40a, du dispositif de fixation 28, respectivement.

## Revendications

1. Dispositif de fixation (28) d'un module de coussin gonflable (34) à l'avant du toit (6) d'un véhicule automobile, comprenant :
- un support (29) avec une portion transversale arrière (42) ; et
- une plaque de soutien (30) du module (34), comprenant un bord arrière (52) configuré pour pouvoir coopérer par engagement pivotant avec la portion transversale arrière (42), et des moyens de fixation latéraux (32), **caractérisé en ce que** le bord arrière (52) comprend des goujons (31) s'étendant essentiellement longitudinalement vers l'arrière, la portion transversale arrière (42) du support présentant des orifices (49) aptes à recevoir lesdits goujons (31).

2. Dispositif de fixation (28) selon la revendication 1, **caractérisé en ce que** la plaque de soutien (30) décrit longitudinalement au niveau du bord arrière (52) une variation d'angle comprise entre 80° et 100°, de manière à présenter un profil coudé.

3. Dispositif de fixation (28) selon la revendication 1 ou 2, **caractérisé en ce que** les moyens de fixation latéraux (32) de la plaque de soutien (30) comprennent des moyens de fixation rapide (58) permettant la fixation provisoire de la plaque (30) après engagement de son bord arrière (52) avec le support (29) et pivotement de ladite plaque (30).

4. Dispositif de fixation (28) selon l'une des revendications 1 à 3, **caractérisé en ce que** la plaque de soutien (30) comprend une patte (39) sur chacun de ses deux bords latéraux, les moyens de fixation latéraux (32) étant sur lesdites pattes (39), préférentiellement sous forme d'orifice(s) (41) sur lesdites pattes (39).

5. Dispositif de fixation (28) selon la revendication 4, **caractérisé en ce qu'**au moins une des pattes (39) comprend une languette (60) apte à coopérer par insertion avec une ouverture (46) du support (29) lors du mouvement de pivotement de la plaque de soutien (30), et où, préférentiellement, un clip élastique (62) à profil rétentif chausse ladite ou au moins une desdites languettes (60), et où, plus préférentiellement, ladite ou lesdites languettes (60) présentent un contour avec au moins une encoche (64) avec laquelle le clip (62) coopère par engagement.

6. Dispositif de fixation (28) selon l'une des revendications 1 à 5, **caractérisé en ce que** le support (29) comprend, outre la portion transversale arrière (42), deux portions longitudinales (40a , 40b) aptes à coopérer avec les moyens de fixation latéraux (32), et préférentiellement apte à cloisonner latéralement le module (34).

7. Dispositif de fixation (28) selon les revendications 4 et 5, **caractérisé en ce que** chacune des pattes (39) est configurée pour venir en appui sur une des portions longitudinales (40a , 40b).

8. Dispositif de fixation (28) selon l'une des revendications 1 à 7, **caractérisé en ce que** la plaque de soutien (30) comprend des nervures (50) s'étendant préférentiellement longitudinalement et préférentiellement réalisées par déformation de ladite plaque (30).

9. Véhicule automobile avec un pare-brise (4) et un toit (6) avec une traverse avant (36), comprenant un module de coussin gonflable (34) fixé à ladite traverse (36) au moyen d'un dispositif de fixation (28), ledit module (34) étant configuré pour se déployer essentiellement vers l'avant et vers le bas, devant le conducteur ou le passager avant ;
**caractérisé en ce que**
le dispositif de fixation (28) est conforme à l'une des revendications 1 à 8, le support (29) étant fixé à la traverse avant (36) préférentiellement par soudage.

## Patentansprüche

1. Vorrichtung (28) zur Befestigung eines Airbagmoduls (34) an der Vorderseite des Daches (6) eines Kraftfahrzeugs, umfassend:
- einen Träger (29) mit einem hinteren Querabschnitt (42), und
- eine Stützplatte (30) des Moduls (34), die einen hinteren Rand (52) umfasst, der konfiguriert ist, um durch schwenkendes Eingreifen mit dem hinteren Querabschnitt (42) zusammenzuwirken, und seitliche Befestigungsmittel (32),
**dadurch gekennzeichnet, dass** der hintere Rand (52) Stifte (31) umfasst, die sich im Wesentlichen längs nach hinten erstrecken, wobei der hintere Querabschnitt (42) des Trägers Öffnungen (49) aufweist, die geeignet sind, die Stifte (31) aufzunehmen.

2. Befestigungsvorrichtung (28) nach Anspruch 1, **dadurch gekennzeichnet, dass** die Stützplatte (30) längs im Bereich des hinteren Rands (52) eine Winkelvariation zwischen 80° und 100° derart beschreibt, dass sie ein Winkelprofil aufweist.

3. Befestigungsvorrichtung (28) nach Anspruch 1 oder 2, **dadurch gekennzeichnet, dass** die seitlichen Befestigungsmittel (32) der Stützplatte (30) Schnellbefestigungsmittel (58) umfassen, die das vorläufige Befestigen der Platte (30) nach dem Eingreifen ihres hinteren Rands (52) in den Träger (29) und das Schwenken der Platte (30) erlauben.

4. Befestigungsvorrichtung (28) nach einem der Ansprüche 1 bis 3, **dadurch gekennzeichnet, dass** die Stützplatte (30) eine Pratze (39) auf jedem ihrer zwei seitlichen Ränder umfasst, wobei die seitlichen Befestigungsmittel (32) auf den Pratzen (39) liegen, bevorzugt in Form einer oder mehrerer Öffnungen (41) auf den Pratzen 39.

5. Befestigungsvorrichtung (28) nach Anspruch 4, **dadurch gekennzeichnet, dass** mindestens eine der Pratzen (39) eine Lasche (60) umfasst, die geeignet ist, um durch Einsetzen mit einer Öffnung (46) des Trägers (29) bei der Schwenkbewegung der Stützplatte (30) zusammenzuwirken, und wobei bevorzugt ein elastischer Clip (62) mit Rückhalteprofil auf mindestens einer der Laschen (60) sitzt, und wobei bevorzugt die Lasche oder die Laschen (60) eine Kontur mit mindestens einer Kerbe (64) aufweist/aufweisen, mit der der Clip (62) durch Eingreifen zusammenwirkt.

6. Befestigungsvorrichtung (28) nach einem der Ansprüche 1 bis 5, **dadurch gekennzeichnet, dass** der Träger (29) außer dem hinteren Querabschnitt (42) zwei Längsabschnitte (40a, 40b) umfasst, die geeignet sind, um mit den seitlichen Befestigungsmitteln (32) zusammenzuwirken, und bevorzugt geeignet sind, um das Modul (34) seitlich abzuteilen.

7. Befestigungsvorrichtung (28) nach den Ansprüchen 4 und 5, **dadurch gekennzeichnet, dass** jede der Pratzen (39) konfiguriert ist, um auf einem der Längsabschnitte (40a, 40b) zum Aufliegen zu kommen.

8. Befestigungsvorrichtung (28) nach einem der Ansprüche 1 bis 7, **dadurch gekennzeichnet, dass** die Stützplatte (30) Rippen (50) umfasst, die sich bevorzugt längs erstrecken und bevorzugt durch Verformen der Platte (30) hergestellt sind.

9. Kraftfahrzeug mit einer Windschutzscheibe (4) und einem Dach (6) mit einem vorderen Querträger (36), der ein Airbagmodul (34) umfasst, das an dem Querträger (36) mittels einer Befestigungsvorrichtung (28) befestigt ist, wobei das Modul (34) konfiguriert ist, um sich im Wesentlichen nach vorn und nach unten vor dem Fahrer oder dem Beifahrer aufzublasen;
**dadurch gekennzeichnet, dass** die Befestigungsvorrichtung (28) einem der Ansprüche 1 bis 8 entspricht, wobei der Träger (29) an dem vorderen Querträger (36) bevorzugt durch Schweißen befestigt ist.

## Claims

1. A device (28) for attaching an airbag module (34) to the front of the roof (6) of a motor vehicle, including:
- a support (29) with a rear transverse portion (42); and
- a plate (30) for supporting the module (34), including a rear edge (52) configured to be able to cooperate by pivoting engagement with the rear transverse portion (42), and lateral attachment means (32),
**characterized in that** the rear edge (52) includes studs (31) extending essentially longitudinally towards the rear, the rear transverse portion (42) of the support having orifices (49) able to receive said studs (31).

2. The attaching device (28) according to Claim 1, **characterized in that** the supporting plate (30) describes longitudinally at the level of the rear edge (52) an angle variation comprised between 80° and 100°, so as to present a bent profile.

3. The attaching device (28) according to Claim 1 or 2, **characterized in that** the lateral fixing means (32) of the supporting plate (30) include rapid attaching means (58) permitting the provisional attaching of the plate (30) after engagement of its rear edge (52) with the support (29) and pivoting of said plate (30).

4. The attaching device (28) according to one of Claims 1 to 3, **characterized in that** the supporting plate (30) includes a lug (39) on each of its two lateral edges, the lateral attaching means (32) being on said lugs (39), preferably in the form of (an) orifice (s) (41) on said lugs (39).

5. The attaching device (28) according to Claim 4, **characterized in that** at least one of the lugs (39) includes a tongue (60) able to cooperate by insertion with an opening (46) of the support (29) during the pivoting movement of the support plate (30), and where, preferably, an elastic clip (62) with retentive profile fits on said or at least one of said tongues (60), and where, more preferably, said tongue or tongues (60) present a contour with at least one notch (64) with which the clip (62) cooperates by engagement.

6. The attaching device (28) according to one of Claims 1 to 5, **characterized in that** the support (29) includes, in addition to the rear transverse portion (42), two longitudinal portions (40a, 40b) able to cooperate with the lateral attaching means (32), and preferably able to laterally partition the module (34).

7. The attaching device (28) according to Claims 4 and 5, **characterized in that** each of the lugs (39) is configured to come to rest on one of the longitudinal portions (40a, 40b).

8. The attaching device (28) according to one of Claims 1 to 7, **characterized in that** the support plate (30) includes ribs (50) extending preferably longitudinally and preferably realized by deformation of said plate (30).

9. A motor vehicle with a windscreen (4) and roof (6) with a front crossmember (36), including an airbag module (34) attached to said crossmember (36) by means of an attaching device (28), said module (34) being configured to deploy itself essentially forwards and downwards, in front of the driver or the front passenger;
**characterized in that**
the attaching device (28) is in accordance with one of Claims 1 to 8, the support (29) being attached to the front crossmember (36) preferably by welding.
